# EUROPEAN PATENT APPLICATION

(11) **EP 4 318 125 A1**
(43) Date of publication of application: **07.02.2024**
(21) Application number: 22795303.1
(22) Date of filing: 09.03.2022
(51) Int. Cl.: G03B 21/00, G03B 21/14, H04N 5/74

(54) **PROJECTION SYSTEM**

(30) Priority: 27.04.2021 JP 2021075381
(71) Applicant: Panasonic Intellectual Property Management Co., Ltd., Kadoma-shi, Osaka 571-0057 (JP)
(72) Inventor: KITANO, Hiroshi, Kadoma-shi, Osaka 571-0057 (JP); NITTA, Mitsuru, Kadoma-shi, Osaka 571-0057 (JP); ABE, Takeshi, Kadoma-shi, Osaka 571-0057 (JP)
(74) Representative: Appelt, Christian W.
(86) International application number: PCT/JP2022/010363
(87) International publication number: WO 2022/230380

(57) **Abstract**

Provided is a projection system having the ability to project image light in the form of visible light and image light in the form of near infrared light and to cut down the cost. In a projection system (100), a light source unit (1) emits a first visible light beam (L1), a second visible light beam (L2) having a longer wavelength than the first visible light beam (L1), and a near infrared light beam (L3). A spatial light modulation unit (2) subjects the first visible light beam (L1), the second visible light beam (L2), and the near infrared light beam (L3), all emitted from the light source unit (1), to spatial light modulation to produce a first image light beam (L11), a second image light beam (L12), and a third image light beam (L13), respectively. A controller (4) may make a projection optical system (3) not only selectively project any one of a plurality of image light beams, including the first image light beam (L11), the second image light beam (L12), and the third image light beam (L13), but also selectively project any two or more of the plurality of image light beams, by controlling the spatial light modulation unit (2) in two different manners.

## Description

### Technical Field

The present disclosure generally relates to a projection system, and more particularly relates to a projection system including a projection optical system.

### Background Art

A projector (projection system) that uses a spatial light modulator has been known in the art (see, for example, Patent Literature 1). A projector of this type irradiates the spatial light modulator with colored light beams in red (R), green (G), and blue (B), for example, and projects, onto a screen, a magnified image light beam that has been modulated by the spatial light modulator. Examples of known projectors of this type include a three-panel type that uses three spatial light modulators and a single-panel type that uses a single spatial light modulator. In the three-panel type, the three spatial light modulators are provided for the three colored light beams in red, green, and blue, respectively. Examples of known spatial light modulators include LCD panels and digital micromirror devices (DMDs).

In the field of projection systems, not only image light in the form of visible light but also image light in the form of near infrared light sometimes need to be projected.

### Citation List

### Patent Literature

Patent Literature 1: JP 2017-54061A

### Summary of Invention

An object of the present disclosure is to provide a projection system having the ability to project image light in the form of visible light and image light in the form of near infrared light and to cut down the cost.

A projection system according to an aspect of the present disclosure includes a light source unit, a spatial light modulation unit, a projection optical system, and a controller. The light source unit emits a first visible light beam, a second visible light beam having a longer wavelength than the first visible light beam, and a near infrared light beam. The spatial light modulation unit subjects the first visible light beam, the second visible light beam, and the near infrared light beam, all emitted from the light source unit, to spatial light modulation to produce a first image light beam, a second image light beam, and a third image light beam, respectively. The controller controls the spatial light modulation unit. The controller may make the projection optical system not only selectively project any one of a plurality of image light beams, including the first image light beam, the second image light beam, and the third image light beam, but also selectively project any two or more of the plurality of image light beams, by controlling the spatial light modulation unit in two different manners.

### Brief Description of Drawings

FIG. 1 illustrates a configuration for a projection system according to a first embodiment;
FIG. 2 is a plan view of a wheel member included in the projection system;
FIG. 3 shows a spectrum including a spectrum of a first visible light beam and a fluorescent spectrum of a first wavelength-converting element in a light source unit included in the projection system;
FIG. 4 shows a spectrum including the spectrum of the first visible light beam and a fluorescent spectrum of a second wavelength-converting element in the light source unit included in the projection system;
FIG. 5 illustrates a configuration for a projection system according to a second embodiment;
FIG. 6 illustrates optical paths in the projection system;
FIG. 7 illustrates a configuration for a projection system according to a third embodiment;
FIG. 8A is a plan view of a first wheel member for use in a light source unit included in the projection system;
FIG. 8B is a plan view of a second wheel member for use in the light source unit included in the projection system;
FIG. 9 illustrates how the light source unit operates in the projection system;
FIG. 10Ais a plan view of a first wheel member included in a projection system according to a variation of the third embodiment;
FIG. 10B is a plan view of a second wheel member included in the projection system according to the variation of the third embodiment;
FIG. 11A illustrates a first exemplary light source unit;
FIG. 11B illustrates a second exemplary light source unit; and
FIG. 11C illustrates a third exemplary light source unit.

### Description of Embodiments

Note that the drawings to be referred to in the following description of first to third embodiments are all schematic representations. Thus, the ratio of the dimensions (including thicknesses) of respective constituent elements illustrated on the drawings does not always reflect their actual dimensional ratio.

### (First embodiment)

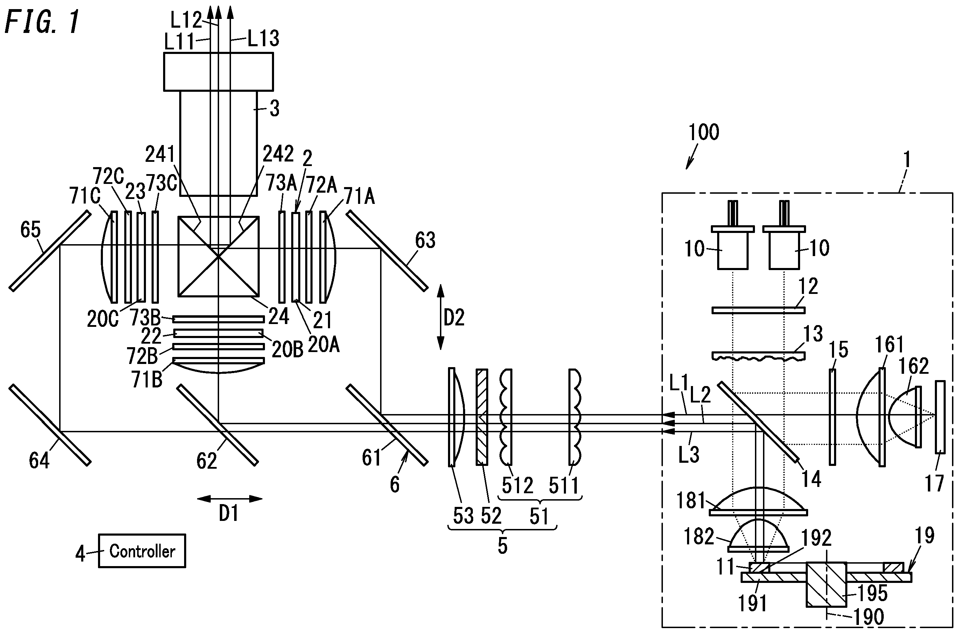

A projection system 100 according to a first embodiment will now be described with reference to FIGS. 1-4.

### (1.1) Overview

As shown in FIG. 1, the projection system 100 includes a light source unit 1, a spatial light modulation unit 2, a projection optical system 3, and a controller 4. The light source unit 1 is configured to emit a first visible light beam L1, a second visible light beam L2, and a near infrared light beam L3. The first visible light beam L1 may be, for example, a blue light beam. The second visible light beam L2 may be, for example, a yellow light beam. In this projection system 100, the first visible light beam L1, the second visible light beam L2, and the near infrared light beam L3, all emitted from the light source unit 1, are subjected to spatial light modulation by the spatial light modulation unit 2 to produce a first image light beam L11, a second image light beam L12, and a third image light beam L13, respectively, which are projected from the projection optical system 3. The projection system 100 may be, for example, a projector.

### (1.2) Configuration for projection system

As shown in FIG. 1, the projection system 100 includes the light source unit 1, the spatial light modulation unit 2, the projection optical system 3, and a controller 4. The spatial light modulation unit 2 includes three image display elements (namely, a first image display element 21, a second image display element 22, and a third image display element 23). Each of the first image display element 21, the second image display element 22, and the third image display element 23 is a liquid crystal display. The spatial light modulation unit 2 further includes a cross dichroic prism 24. The projection system 100 further includes a lighting optical system 5 and an optical isolation unit 6. The optical isolation unit 6 isolates, from each other, the first visible light beam L1, the second visible light beam L2, and the near infrared light beam L3 emerging from the light source unit 1.

In the following description, the lighting optical system 5, the optical isolation unit 6, the spatial light modulation unit 2, and the projection optical system 3 will be described first, and then the light source unit 1 and the controller 4 will be described.

### (1.2.1) Lighting optical system

The lighting optical system 5 is an optical system for uniformizing the respective illuminance distributions of the first image display element 21, the second image display element 22, and the third image display element 23.

The lighting optical system 5 includes an integrator optical system 51, a polarization beam splitter 52, a condenser lens 53, a first field lens 71A, a second field lens 71B, and a third field lens 71C.

In the lighting optical system 5, the integrator optical system 51, the polarization beam splitter 52, and the condenser lens 53 are arranged side by side in this order on an extension of the optical axis of the light source unit 1 such that the integrator optical system 51 is located closer to the light source unit 1 than the polarization beam splitter 52 or the condenser lens 53 is.

The integrator optical system 51 includes a first lens array 511 and a second lens array 512. Each of the first lens array 511 and the second lens array 512 is an integrator lens (also called a "fly-eye lens"). In the lighting optical system 5, the first lens array 511, the second lens array 512, the polarization beam splitter 52, and the condenser lens 53 are arranged side by side in this order on the extension of the optical axis of the light source unit 1 such that the first lens array 511 is located closer to the light source unit 1 than the second lens array 512, the polarization beam splitter 52, or the condenser lens 53 is.

The first field lens 71A faces the first image display element 21 on the light incident surface thereof. More specifically, the first field lens 71A is disposed on the optical path of the first visible light beam L1 between a first mirror 63 (to be described later) and the first image display element 21.

The second field lens 71B faces the second image display element 22 on the light incident surface thereof. More specifically, the second field lens 71B is disposed on the optical path of the second visible light beam L2 between a second dichroic mirror 62 (to be described later) and the second image display element 22.

The third field lens 71C faces the third image display element 23 on the light incident surface thereof. More specifically, the third field lens 71C is disposed on the optical path of the near infrared light beam L3 between a third mirror 65 (to be described later) and the third image display element 23.

### (1.2.2) Optical isolation unit

The optical isolation unit 6 includes a first dichroic mirror 61, the second dichroic mirror 62, the first mirror 63, a second mirror 64, and the third mirror 65.

The first dichroic mirror 61, the second dichroic mirror 62, and the second mirror 64 are arranged side by side in this order on the extension of the optical axis of the light source unit 1 such that the first dichroic mirror 61 is located closer to the light source unit 1 than the second dichroic mirror 62 or the second mirror 64 is. The first dichroic mirror 61, the second dichroic mirror 62, and the second mirror 64 are substantially parallel to each other. Meanwhile, the first dichroic mirror 61 and the first mirror 63 are arranged side by side in a second direction D2 perpendicular to a first direction D1 in which the first dichroic mirror 61, the second dichroic mirror 62, and the second mirror 64 are arranged side by side. The first dichroic mirror 61 and the first mirror 63 are substantially parallel to each other. The second mirror 64 and the third mirror 65 are arranged side by side in the second direction D2. The second mirror 64 and the third mirror 65 are not parallel to each other.

The first dichroic mirror 61 transmits the second visible light beam L2 and the near infrared light beam L3, and reflects the first visible light beam L1 toward the first mirror 63, out of the first visible light beam L1, the second visible light beam L2, and the near infrared light beam L3 emerging from the light source unit 1. The first mirror 63 further reflects the first visible light beam L1, which has been reflected from the first dichroic mirror 61, toward the first image display element 21.

The second dichroic mirror 62 transmits the near infrared light beam L3, out of the second visible light beam L2 and the near infrared light beam L3 that have been transmitted through the first dichroic mirror 61, and reflects the second visible light beam L2 toward the second image display element 22.

The second mirror 64 reflects the near infrared light beam L3, which has been transmitted through the second dichroic mirror 62, toward the third mirror 65. The third mirror 65 further reflects the near infrared light beam L3, which has been reflected from the second mirror 64, toward the third image display element 23.

### (1.2.3) Spatial light modulation unit

The spatial light modulation unit 2 includes the first image display element 21, the second image display element 22, and the third image display element 23. The spatial light modulation unit 2 further includes the cross dichroic prism 24.

The first visible light beam L1 reflected from the first mirror 63 is incident on the first image display element 21 through the first field lens 71A. The second visible light beam L2 reflected from the second dichroic mirror 62 is incident on the second image display element 22 through the second field lens 71B. The near infrared light beam L3 reflected from the third mirror 65 is incident on the third image display element 23 through the third field lens 71C.

Each of the first image display element 21, the second image display element 22, and the third image display element 23 is a liquid crystal display (LCD panel). More specifically, each of the first image display element 21, the second image display element 22, and the third image display element 23 may be, for example, an active-matrix-addressed transmissive liquid crystal display. The first image display element 21, the second image display element 22, and the third image display element 23 are controlled by the controller 4.

The first image display element 21 includes a first LCD panel 20A, a polarizer 72A arranged to face the light incident surface of the first LCD panel 20A, and a polarizer 73A arranged to face the light emergent surface of the first LCD panel 20A. In the first image display element 21, the first visible light beam L1 is incident on a plurality of pixels of the first LCD panel 20A to have the first image light beam L11 produced by the first LCD panel 20A.

The second image display element 22 includes a second LCD panel 20B, a polarizer 72B arranged to face the light incident surface of the second LCD panel 20B, and a polarizer 73B arranged to face the light emergent surface of the second LCD panel 20B. In the second image display element 22, the second visible light beam L2 is incident on a plurality of pixels of the second LCD panel 20B to have the second image light beam L12 produced by the second LCD panel 20B.

The third image display element 23 includes a third LCD panel 20C, a polarizer 72C arranged to face the light incident surface of the third LCD panel 20C, and a polarizer 73C arranged to face the light emergent surface of the third LCD panel 20C. In the third image display element 23, the near infrared light beam L3 is incident on a plurality of pixels of the third LCD panel 20C to have the third image light beam L13 produced by the third LCD panel 20C.

The spatial light modulation unit 2 is surrounded with the optical isolation unit 6 and the projection optical system 3. In the spatial light modulation unit 2, the cross dichroic prism 24 is located in the first direction D1 between the first image display element 21 and the third image display element 23 and is located in the second direction D2 between the second image display element 22 and the projection optical system 3.

The cross dichroic prism 24 is arranged to synthesize together the first image light beam L11 produced by the first image display element 21, the second image light beam L12 produced by the second image display element 22, and the third image light beam L13 produced by the third image display element 23 and let the synthesized light incident on the projection optical system 3. The first image light beam L11 includes the first visible light beam L1 subjected to spatial light modulation by the plurality of pixels of the first image display element 21. The second image light beam L12 includes the second image light beam L12 subjected to spatial light modulation by the plurality of pixels of the second image display element 22. The third image light beam L13 includes the near infrared light beam L3 subjected to spatial light modulation by the plurality of pixels of the third image display element 23.

The cross dichroic prism 24 includes a first film (first multilayer dielectric film) 241 and a second film (second multilayer dielectric film) 242. The first film 241 and the second film 242 are arranged to cross each other at right angles. The first film 241 is substantially parallel to the first mirror 63 and the second dichroic mirror 62. The second film 242 is substantially parallel to the third mirror 65. The first film 241 reflects the first image light beam L11 coming from the first image display element 21 and transmits the second image light beam L12 coming from the second image display element 22. The second film 242 reflects the third image light beam L13 coming from the third image display element 23 and transmits the second image light beam L12 coming from the second image display element 22.

### (1.2.4) Projection optical system

The projection optical system 3 may project the first image light beam L11, the second image light beam L12, and the third image light beam L13 coming from the spatial light modulation unit 2. The first image light beam L11, the second image light beam L12, and the third image light beam L13 emerging from the projection optical system 3 are projected, for example, onto a screen which intersects with an extension of the optical axis of the projection optical system 3. The projection optical system 3 includes a projection lens, through which the first image light beam L11, the second image light beam L12, and the third image light beam L13 coming from the cross dichroic prism 24 are projected. The projection lens is a multi-lens.

### (1.2.5) Light source unit

The light source unit 1 includes a light-emitting element 10 and a wavelength-converting portion 11. The wavelength-converting portion 11 includes a first wavelength-converting element that emits the second visible light beam L2 when excited by the first visible light beam L1 and a second wavelength-converting element that emits the near infrared light beam L3 when excited by the first visible light beam L1. The first visible light beam L1 may be, for example, a blue light beam. The second visible light beam L2 may be a yellow light beam.

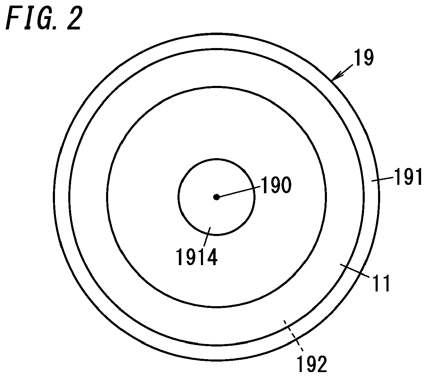

The light source unit 1 includes a rotator 191. The rotator 191 is rotatable on a center axis of rotation 190. The center axis of rotation 190 is substantially parallel to the second direction D2. The rotator 191 is coupled to, and rotates along with, a rotary shaft 195 of a motor, for example. Part of the rotary shaft 195 of the motor is inserted into a circular opening 1914 (refer to FIG. 2) of the rotator 191. The rotator 191 has a reflective surface 192 that reflects the second visible light beam L2 and the near infrared light beam L3. The wavelength-converting portion 11 is placed on the reflective surface 192 of the rotator 191 and has a ring shape when viewed in a direction aligned with the center axis of rotation 190. The rotator 191 has a circular shape when viewed in the direction aligned with the center axis of rotation 190. The rotator 191 is arranged such that a thickness direction defined for the rotator 191 is aligned with the center axis of rotation 190. The reflective surface 192 intersects with the thickness direction defined for the rotator 191.

The light-emitting element 10 is a semiconductor laser diode having an emission wavelength equal to or longer than 400 nm and equal to or shorter than 480 nm. Thus, the first visible light beam L1 is a blue light beam having a peak wavelength within the wavelength range equal to or longer than 400 nm and equal to or shorter than 480 nm.

The second visible light beam L2 is fluorescent light having light components over the entire wavelength range equal to or longer than 500 nm and equal to or shorter than 600 nm. The second visible light beam L2 is a yellow light beam.

The near infrared light beam L3 is fluorescent light having light components over the entire wavelength range equal to or longer than 700 nm and equal to or shorter than 800 nm and having a peak of fluorescence intensity within the wavelength range equal to or longer than 700 nm and equal to or shorter than 800 nm.

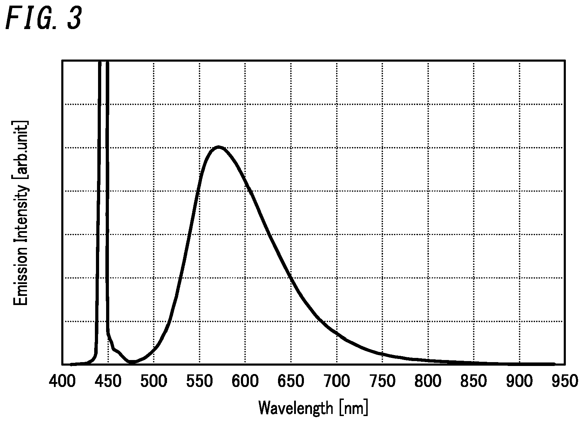

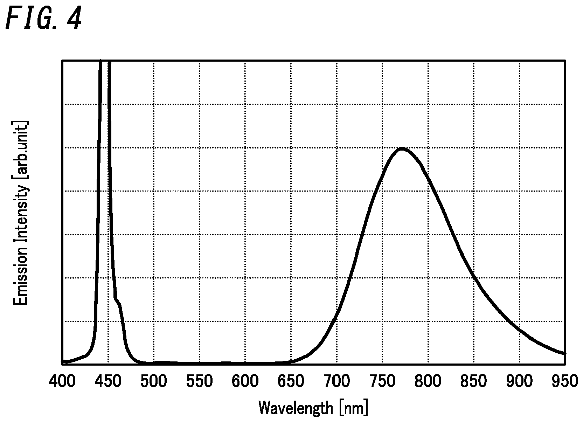

The wavelength-converting portion 11 may include, for example, a light-transmitting material portion, first phosphor particles, and second phosphor particles. In this case, the wavelength-converting portion 11 is formed as a mixture of the light-transmitting material portion, the first phosphor particles. and the second phosphor particles. In the wavelength-converting portion 11, there are a great number of first phosphor particles and a great number of second phosphor particles inside the light-transmitting material portion. A material for the light-transmitting material portion (i.e., light-transmitting material) is preferably a material that has high transmittance to visible light. The light-transmitting material may be, for example, a silicone-based resin. Examples of the "silicone-based resin" include silicone resin and modified silicone resin. The wavelength-converting portion 11 contains the first phosphor particles as the first wavelength-converting element and the second phosphor particles as the second wavelength-converting element. As the first phosphor particles, yellow phosphor particles that radiate yellow light may be adopted, for example. The light (fluorescence) radiated from the yellow phosphor particles preferably has an emission spectrum having a primary emission peak wavelength in a wavelength range equal to or longer than 530 nm and equal to or shorter than 580 nm, for example. The first wavelength-converting element may for example be, but does not have to be, Y₃Al₅O₁₂: Ce³⁺. The second wavelength-converting element may for example be, but does not have to be, (Gd_{0.75}La_{0.25})₃(Ga_{0.97}Cr_{0.03})₂Ga₃O₁₂: Ce³⁺. The second wavelength-converting element may be at least one phosphor selected from the group consisting of, for example, Lu₂CaMg₂ (SiO₄)₃: Cr³⁺, Y₃Ga₂(AlO₄)₃: Cr³⁺, Y₃Ga₂(GaO₄)₃: Cr³⁺, Gd₃Ga₂(AlO₄)₃: Cr³⁺, Gd₃Ga₂(GaO₄)₃: Cr³⁺, (Y, La)₃ Ga₂(GaO₄)₃: Cr³⁺, (Gd, La)₃Ga₂(GaO₄)₃: Cr³⁺, Ca₂LuZr₂(AlO₄)₃: Cr³⁺, Ca₂GdZr₂(AlO₄)₃: Cr³⁺, Lu₃Sc₂(GaO₄)₃: Cr³⁺, Y₃Sc₂(AlO₄)₃: Cr³⁺, Y₃Sc₂(GaO₄)₃: Cr³⁺, Gd₃Sc₂(GaO₄)₃: Cr³⁺, La₃Sc₂ (GaO₄)₃: Cr³⁺, Ca₃Sc₂(SiO₄)₃: Cr³⁺, Ca₃Sc₂(GeO₄)₃: Cr³⁺, BeAl₂O₄: Cr³⁺, LiAl₅O₈: Cr³⁺, LiGa₅O₈: Cr³⁺, Mg₂SiO₄: Cr³⁺, Li⁺, La₃Ga₅GeO₁₄: Cr³⁺, and La₃Ga_{5.5}Nb_{0.5}O₁₄: Cr³⁺. FIG. 3 shows an exemplary fluorescent spectrum of the fluorescent light emitted from Y₃Al₅O₁₂: Ce³⁺ as the first wavelength-converting element when the first wavelength-converting element is excited by a laser beam having an emission wavelength of 445 nm. FIG. 4 shows an exemplary fluorescent spectrum of the fluorescent light emitted from (Gd_{0.75}La_{0.25})₃ (Ga_{0.97}Cr_{0.03})₂Ga₃O₁₂: Ce³⁺ as the second wavelength-converting element when the second wavelength-converting element is excited by a laser beam having an emission wavelength of 445 nm.

In the light source unit 1, a wheel member 19 (hereinafter also referred to as a "phosphor wheel 19") is formed by the rotator 191 and the wavelength-converting portion 11.

The light source unit 1 includes a plurality of (e.g., two) the light-emitting elements 10. The light source unit 1 further includes a half-wave plate 12, a diffuser 13, a dichroic mirror 14, a quarter-wave plate 15, a first condenser lens 161, a second condenser lens 162, a mirror 17, a third condenser lens 181, and a fourth condenser lens 182. The lens diameter of the second condenser lens 162 is smaller than the lens diameter of the first condenser lens 161. The lens diameter of the fourth condenser lens 182 is smaller than the lens diameter of the third condenser lens 181.

In the light source unit 1, the first visible light beams L1 emitted from the plurality of light-emitting elements 10 are incident on the dichroic mirror 14 through the half-wave plate 12 and the diffuser 13.

Part of the first visible light beam L1 incident on the dichroic mirror 14 is reflected from the dichroic mirror 14 to be incident on the mirror 17 via the quarter-wave plate 15, the first condenser lens 161, and the second condenser lens 162. The first visible light beam L1 reflected from the mirror 17 is transmitted through the second condenser lens 162, the first condenser lens 161, the quarter-wave plate 15, and the dichroic mirror 14 to emerge from the light source unit 1.

Another part of the first visible light beam L1 incident on the dichroic mirror 14 is transmitted through the dichroic mirror 14, condensed by the third condenser lens 181 and the fourth condenser lens 182, and then incident on the wavelength-converting portion 11 to excite the first wavelength-converting element and the second wavelength-converting element of the wavelength-converting portion 11. This causes the wavelength-converting portion 11 to emit the second visible light beam L2 and the near infrared light beam L3. The second visible light beam L2 and the near infrared light beam L3 are then incident on the dichroic mirror 14 through the fourth condenser lens 182 and the third condenser lens 181 and reflected from the dichroic mirror 14 to emerge from the light source unit 1.

### (1.2.6) Controller

The controller 4 controls the first image display element 21, the second image display element 22, and the third image display element 23 in accordance with image information (image signal) provided by an external device. This allows the spatial light modulation unit 2 to modulate the first visible light beam (blue light beam) L1, the second visible light beam (yellow light beam) L2, and the near infrared light beam L3 into the first image light beam L11, the second image light beam L12, and the third image light beam L13, respectively, and make the first image light beam L11, the second image light beam L12, and the third image light beam L13 incident on the projection optical system 3 from the cross dichroic prism 24. The projection system 100 may make the projection optical system 3 project a visible light image and a near infrared light image by making the controller 4 appropriately control the first image display element 21, the second image display element 22, and the third image display element 23. Each of the visible light image and the near infrared light image may be either a still picture or a moving picture, whichever is appropriate.

The controller 4 includes a computer system. The computer system may include a processor and a memory as principal hardware components thereof. The functions of the controller 4 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

### (1.2.7) Other constituent elements

The projection system 100 further includes a drive circuit for driving the light-emitting elements 10 and a motor driver circuit for driving the motor with the rotary shaft described above. A supply voltage is supplied from, for example, a first power supply circuit of a power supply unit to the drive circuit and the motor driver circuit. A supply voltage is supplied from, for example, a second power supply circuit of the power supply unit to the controller 4. In this embodiment, the first power supply circuit and the second power supply circuit are not constituent elements of the projection system 100. However, this is only an example and should not be construed as limiting. Alternatively, the first power supply circuit and the second power supply circuit may also be constituent elements of the projection system 100.

The projection system 100 further includes a housing. In this projection system 100, the light source unit 1, the spatial light modulation unit 2, the projection optical system 3, the controller 4, the lighting optical system 5, the optical isolation unit 6, the first field lens 71A, the second field lens 71B, the third field lens 71C, the drive circuit, the motor driver circuit, and the power supply unit are housed in the housing.

### (1.3) Recapitulation

A projection system 100 according to the first embodiment includes a light source unit 1, a spatial light modulation unit 2, a projection optical system 3, and a controller 4. The light source unit 1 emits a first visible light beam L1, a second visible light beam L2 having a longer wavelength than the first visible light beam L1, and a near infrared light beam L3. The spatial light modulation unit 2 subjects the first visible light beam L1, the second visible light beam L2, and the near infrared light beam L3, all emitted from the light source unit 1, to spatial light modulation to produce a first image light beam L11, a second image light beam L12, and a third image light beam L13, respectively. The controller 4 controls the spatial light modulation unit 2. The controller 4 may make the projection optical system 3 not only selectively project any one of a plurality of image light beams, including the first image light beam L11, the second image light beam L12, and the third image light beam L13, but also selectively project any two or more of the plurality of image light beams, by controlling the spatial light modulation unit 2 in two different manners.

The projection system 100 according to the first embodiment may project image light beams (namely, the first image light beam L11 and the second image light beam L12) in the form of visible light and an image light beam (namely, the third image light beam L13) in the form of near infrared light and may cut down the cost.

The projection system 100 according to the first embodiment may switch from any one of first, second, third, fourth, and fifth states to another by making the controller 4 control the spatial light modulation unit 2. As used herein, the expression "the controller 4 controls the spatial light modulation unit 2" means that the controller 4 controls the first image display element 21, the second image display element 22, and the third image display element 23. The projection system 100 according to the first embodiment makes the controller 4 control the spatial light modulation unit 2 when projecting an image light beam from the projection optical system 3. In this manner, the projection system 100 according to the first embodiment may or may not allow the first image light beam L11 to emerge from the first image display element 21, may or may not allow the second image light beam L12 to emerge from the second image display element 22, and may or may not allow the third image light beam L13 to emerge from the third image display element 23. The first image light beam L11 is not allowed to emerge from the first image display element 21, for example, in a situation where the first image display element 21 is prevented from producing the first image light beam L11. The second image light beam L12 is not allowed to emerge from the second image display element 22, for example, in a situation where the second image display element 22 is prevented from producing the second image light beam L12. The third image light beam L13 is not allowed to emerge from the third image display element 23, for example, in a situation where the third image display element 23 is prevented from producing the third image light beam L13. As used herein, the first state refers to a state where an arbitrary image light beam selected from the group consisting of the first image light beam L11, the second image light beam L12, and the third image light beam L13 is projected by the projection optical system 3 via the cross dichroic prism 24. The second state herein refers to a state where the first image light beam L11 and the second image light beam L12 are projected by the projection optical system 3 via the cross dichroic prism 24. The third state herein refers to a state where the first image light beam L11 and the third image light beam L13 are projected by the projection optical system 3 via the cross dichroic prism 24. The fourth state herein refers to a state where the second image light beam L12 and the third image light beam L13 are projected by the projection optical system 3 via the cross dichroic prism 24. The fifth state herein refers to a state where the first image light beam L11, the second image light beam L12, and the third image light beam L13 are projected by the projection optical system 3 via the cross dichroic prism 24. The projection system 100 according to the first embodiment may project image light beams (namely, the first image light beam L11 and the second image light beam L12) in the form of visible light and an image light beam (namely, the third image light beam L13) in the form of near infrared light without changing the number or the arrangement of respective parts of the known three-panel projector that uses three LCD panels for the colored light beams in red, green, and blue, thus enabling cutting down the cost.

In addition, in the projection system 100 according to the first embodiment, the first visible light beam L1 is a blue light beam and the second visible light beam L2 is a yellow light beam. This allows the projection system 100 according to the first embodiment to turn the respective colors of a plurality of pixels of a projected image into white by synthesizing together the first image light beam L11 and the second image light beam L12. The known three-panel projector outputs white light using three image display elements. In contrast, the projection system 100 according to the first embodiment is designed to cut down the number of image display elements to use to output white light to two (namely, the first image display element 21 and the second image display element 22) and to assign the other image display element (namely, the third image display element 23) to near infrared light.

The projection system 100 according to the first embodiment is suitable for use in, for example, a medical lighting system, to which indocyanine green (ICG) fluorescent light observation is applied.

### (Second embodiment)

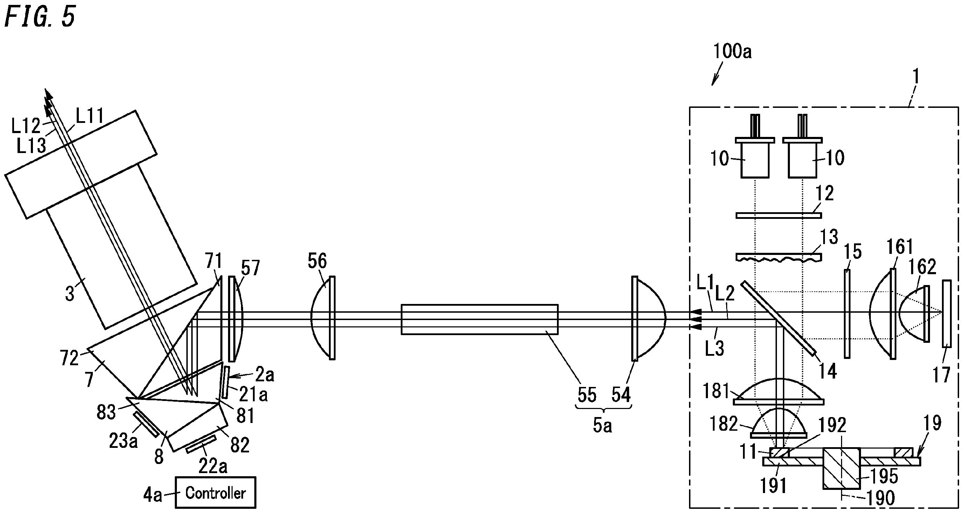

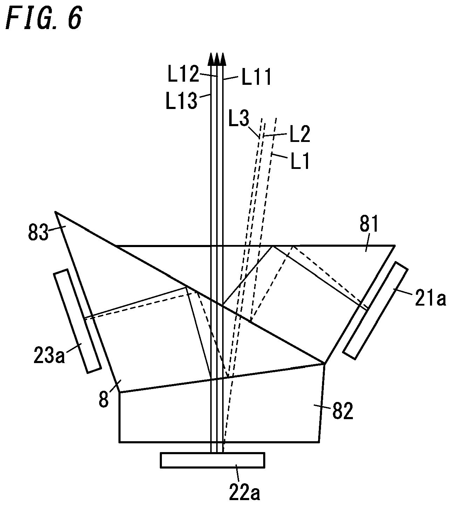

Next, a projection system 100a according to a second embodiment will be described with reference to FIGS. 5 and 6.

The projection system 100a according to the second embodiment includes a lighting optical system 5a and a spatial light modulation unit 2a instead of the lighting optical system 5 and the spatial light modulation unit 2 of the projection system 100 according to the first embodiment, which is a difference from the projection system 100 according to the first embodiment. In the following description, any constituent element of the projection system 100a according to this second embodiment, having the same function as a counterpart of the projection system 100 according to the first embodiment, will be designated by the same reference numeral as that counterpart's, and description thereof will be omitted herein.

### (2.1) Overview

As shown in FIG. 5, the projection system 100a includes a light source unit 1, a spatial light modulation unit 2a, a projection optical system 3, and a controller 4a. The light source unit 1 is configured to emit a first visible light beam L1, a second visible light beam L2, and a near infrared light beam L3. The first visible light beam L1 may be, for example, a blue light beam. The second visible light beam L2 may be, for example, a yellow light beam. In this projection system 100a, the first visible light beam L1, the second visible light beam L2, and the near infrared light beam L3, all emitted from the light source unit 1, are subjected to spatial light modulation by the spatial light modulation unit 2a to produce a first image light beam L11, a second image light beam L12, and a third image light beam L13, respectively, which are projected from the projection optical system 3. The projection system 100a may be, for example, a projector.

### (2.2) Configuration for projection system

As shown in FIG. 5, the projection system 100a includes the light source unit 1, a spatial light modulation unit 2a, the projection optical system 3, and a controller 4a. The spatial light modulation unit 2a includes a first image display element 21a, a second image display element 22a, and a third image display element 23a.

The projection system 100a further includes a lighting optical system 5a, a first relay lens 56, a second relay lens 57, a totally reflecting prism 7, and a color separation/synthetic prism 8.

### (2.2.1) Lighting optical system

The lighting optical system 5a is an optical system for uniformizing the respective illuminance distributions of the first image display element 21a, the second image display element 22a, and the third image display element 23a.

The lighting optical system 5a includes a condenser lens 54 and an integrator rod 55.

In this lighting optical system 5a, the condenser lens 54 and the integrator rod 55 are arranged in this order on an extension of the optical axis of the light source unit 1 such that the condenser lens 54 is located closer to the light source unit 1 than the integrator rod 55 is.

The first visible light beam L1, the second visible light beam L2, and the near infrared light beam L3 emerging from the light source unit 1 are transmitted through the lighting optical system 5a and incident on the totally reflecting prism 7 through the first relay lens 56 and the second relay lens 57.

### (2.2.2) Spatial light modulation unit

The spatial light modulation unit 2a includes the first image display element 21a, the second image display element 22a, and the third image display element 23a. Each of the first image display element 21a, the second image display element 22a, and the third image display element 23a is an MEMS device having a plurality of moving mirrors provided for plurality of pixels, respectively. For example, each of the first image display element 21a, the second image display element 22a, and the third image display element 23a may be a digital micromirror device (DMD).

### (2.2.3) Totally reflecting prism

The totally reflecting prism 7 includes two triangular prisms 71, 72, which are arranged to face each other with a very narrow gap left between themselves.

The totally reflecting prism 7 totally reflects the first visible light beam L1, the second visible light beam L2, and the near infrared light beam L3, all coming from the second relay lens 57, toward the color separation/synthetic prism 8. In addition, the totally reflecting prism 7 lets the first image light beam L11, the second image light beam L12, and the third image light beam L13, which have been produced by having the first visible light beam L1, the second visible light beam L2, and the near infrared light beam L3 subjected to spatial light modulation by the first image display element 21a, the second image display element 22a, and the third image display element 23a, respectively, emerge toward the projection optical system 3.

### (2.2.4) Color separation/synthetic prism

The color separation/synthetic prism 8 includes two triangular prisms 81, 83 and one trapezoidal prism 82. The two triangular prisms 81, 83 are arranged to face each other with a very narrow gap left between themselves. The triangular prism 83 and the trapezoidal prism 82 are also arranged to face each other with a very narrow gap left between themselves.

The color separation/synthetic prism 8 separates the first visible light beam L1, the second visible light beam L2, and the near infrared light beam L3, which have been totally reflected from the totally reflecting prism 7, to make the first visible light beam L1, the second visible light beam L2, and the near infrared light beam L3 incident on the first image display element 21a, the second image display element 22a, and the third image display element 23a, respectively. In FIG. 6, exemplary optical paths of the first visible light beam L1, the second visible light beam L2, and the near infrared light beam L3 that have been totally reflected from the totally reflecting prism 7 (refer to FIG. 5) are indicated by the dashed lines.

In addition, the color separation/synthetic prism 8 may also synthesize together the first image light beam L11, the second image light beam L12, and the third image light beam L13, which have been produced by the first image display element 21a, the second image display element 22a, and the third image display element 23a, respectively, to let the synthesized light beam emerge toward the projection optical system 3. In FIG. 6, exemplary optical paths of the first image light beam L11, the second image light beam L12, and the third image light beam L13 are indicated by the fine solid lines.

### (2.2.5) Projection optical system

The projection optical system 3 may project the first image light beam L11, the second image light beam L12, and the third image light beam L13, all coming from the spatial light modulation unit 2a. The first image light beam L11, the second image light beam L12, and the third image light beam L13 emerging from the projection optical system 3 are projected, for example, onto a screen which intersects with an extension of the optical axis of the projection optical system 3. The projection optical system 3 includes a projection lens, through which at least one image light beam, selected from the first image light beam L11, the second image light beam L12, and the third image light beam L13, all emerging from the color separation/synthetic prism 8 and transmitted through the totally reflecting prism 7, is projected. The projection lens is a multi-lens.

### (2.2.6) Light source unit

The light source unit 1 includes a plurality of (e.g., two) light-emitting elements 10 and a wavelength-converting portion 11. The wavelength-converting portion 11 includes a first wavelength-converting element that emits the second visible light beam L2 when excited by the first visible light beam and a second wavelength-converting element that emits the near infrared light beam L3 when excited by the first visible light beam L1. The first visible light beam L1 may be, for example, a blue light beam. The second visible light beam L2 may be a yellow light beam.

### (2.2.7) Controller

The controller 4a controls the first image display element 21a, the second image display element 22a, and the third image display element 23a in accordance with image information (image signal) provided by an external device. This allows the spatial light modulation unit 2a to modulate the first visible light beam (blue light beam) L1, the second visible light beam (yellow light beam) L2, and the near infrared light beam L3 into the first image light beam L11, the second image light beam L12, and the third image light beam L13, respectively, and make the first image light beam L11, the second image light beam L12, and the third image light beam L13 incident on the projection optical system 3 from the totally reflecting prism 7. The projection system 100a may make the projection optical system 3 project a visible light image and a near infrared light image by making the controller 4a appropriately control the first image display element 21a, the second image display element 22a, and the third image display element 23a. Each of the visible light image and the near infrared light image may be either a still picture or a moving picture, whichever is appropriate.

The controller 4a includes a computer system. The computer system may include a processor and a memory as principal hardware components thereof. The functions of the controller 4a according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a VLSI, and a ULSI. Optionally, an FPGA to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

### (2.2.8) Other constituent elements

The projection system 100a further includes a drive circuit for driving the light-emitting elements 10 and a motor driver circuit for driving the motor. A supply voltage is supplied from, for example, a first power supply circuit of a power supply unit to the drive circuit and the motor driver circuit. A supply voltage is supplied from, for example, a second power supply circuit of the power supply unit to the controller 4a. In this embodiment, the first power supply circuit and the second power supply circuit are not constituent elements of the projection system 100a. However, this is only an example and should not be construed as limiting. Alternatively, the first power supply circuit and the second power supply circuit may also be constituent elements of the projection system 100a.

The projection system 100a further includes a housing. In this projection system 100a, the light source unit 1, the spatial light modulation unit 2a, the projection optical system 3, the controller 4a, the lighting optical system 5a, the first relay lens 56, the second relay lens 57, the totally reflecting prism 7, the color separation/synthetic prism 8, the drive circuit, the motor driver circuit, and the power supply unit are housed in the housing.

### (2.3) Recapitulation

A projection system 100a according to the second embodiment includes a light source unit 1, a spatial light modulation unit 2a, a projection optical system 3, and a controller 4a. The light source unit 1 emits a first visible light beam L1, a second visible light beam L2 having a longer wavelength than the first visible light beam L1, and a near infrared light beam L3. The spatial light modulation unit 2a subjects the first visible light beam L1, the second visible light beam L2, and the near infrared light beam L3, all emitted from the light source unit 1, to spatial light modulation to produce a first image light beam L11, a second image light beam L12, and a third image light beam L13, respectively. The controller 4a controls the spatial light modulation unit 2a. The controller 4a may make the projection optical system 3 not only selectively project any one of a plurality of image light beams, including the first image light beam L11, the second image light beam L12, and the third image light beam L13, but also selectively project any two or more of the plurality of image light beams, by controlling the spatial light modulation unit 2a in two different manners.

The projection system 100a according to the second embodiment may project image light beams (namely, the first image light beam L11 and the second image light beam L12) in the form of visible light and an image light beam (namely, the third image light beam L13) in the form of near infrared light and may cut down the cost.

The projection system 100a according to the second embodiment may switch from any one of first, second, third, fourth, and fifth states to another by making the controller 4a control the spatial light modulation unit 2a. As used herein, the expression "the controller 4a controls the spatial light modulation unit 2a" means that the controller 4a controls the first image display element 21a, the second image display element 22a, and the third image display element 23a. The projection system 100a according to the second embodiment makes the controller 4a control the spatial light modulation unit 2a when projecting an image light beam from the projection optical system 3. In this manner, the projection system 100a according to the second embodiment may or may not allow the first image light beam L11 to emerge from the first image display element 21a, may or may not allow the second image light beam L12 to emerge from the second image display element 22a, and may or may not allow the third image light beam L13 to emerge from the third image display element 23a. The first image light beam L11 is not allowed to emerge from the first image display element 21a, for example, in a situation where the first image display element 21a is prevented from producing the first image light beam L11. The second image light beam L12 is not allowed to emerge from the second image display element 22a, for example, in a situation where the second image display element 22a is prevented from producing the second image light beam L12. The third image light beam L13 is not allowed to emerge from the third image display element 23a, for example, in a situation where the third image display element 23a is prevented from producing the third image light beam L13. As used herein, the first state refers to a state where an arbitrary image light beam selected from the first image light beam L11, the second image light beam L12, and the third image light beam L13 is made to emerge from the totally reflecting prism 7 and be projected by the projection optical system 3. The second state herein refers to a state where the first image light beam L11 and the second image light beam L12 are made to emerge from the totally reflecting prism 7 and be projected by the projection optical system 3. The third state herein refers to a state where the first image light beam L11 and the third image light beam L13 are made to emerge from the totally reflecting prism 7 and be projected by the projection optical system 3. The fourth state herein refers to a state where the second image light beam L12 and the third image light beam L13 are made to emerge from the totally reflecting prism 7 and be projected by the projection optical system 3. The fifth state herein refers to a state where the first image light beam L11, the second image light beam L12, and the third image light beam L13 are made to emerge from the totally reflecting prism 7 and be projected by the projection optical system 3. The projection system 100a according to the second embodiment may project image light beams (namely, the first image light beam L11 and the second image light beam L12) in the form of visible light and an image light beam (namely, the third image light beam L13) in the form of near infrared light without changing the number or the arrangement of respective parts of the known three-panel projector that uses three DMDs provided for the colored light beams in red, green, and blue, thus enabling cutting down the cost.

The projection system 100a according to the second embodiment is suitable for use in, for example, a medical lighting system, to which ICG fluorescent light observation is applied.

### (Third embodiment)

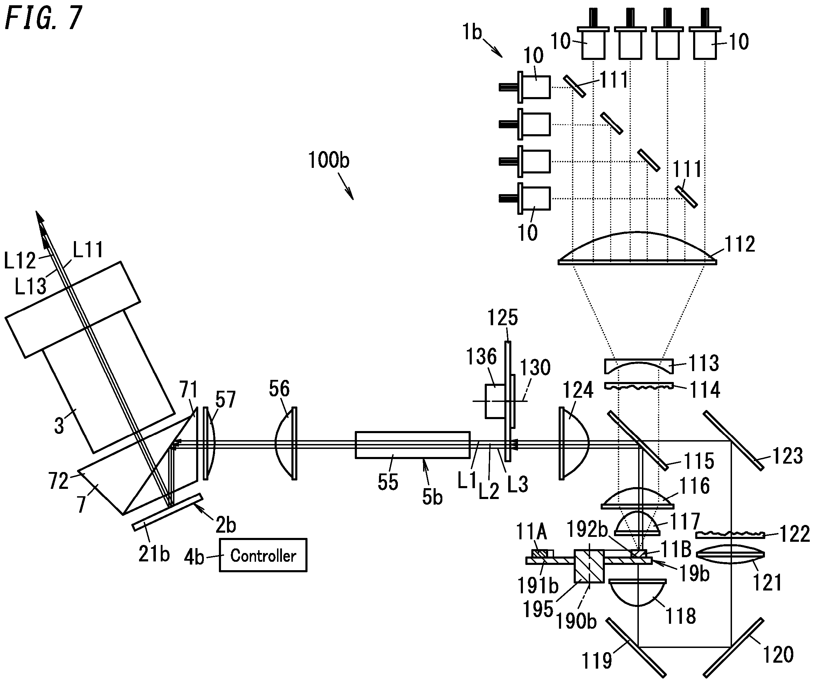

A projection system 100b according to a third embodiment will now be described with reference to FIGS. 7, 8A, 8B, and 9.

The projection system 100b according to the third embodiment includes a light source unit 1b and a spatial light modulation unit 2b instead of the light source unit 1 and the spatial light modulation unit 2a of the projection system 100a according to the second embodiment, which is a difference from the projection system 100a according to the second embodiment. In the following description, any constituent element of the projection system 100b according to this third embodiment, having the same function as a counterpart of the projection system 100a according to the second embodiment, will be designated by the same reference numeral as that counterpart's, and description thereof will be omitted herein.

### (3.1) Overview

As shown in FIG. 7, the projection system 100b includes a light source unit 1b, a spatial light modulation unit 2b, the projection optical system 3, and a controller 4b. The light source unit 1b is configured to emit a first visible light beam L1, a second visible light beam L2, and a near infrared light beam L3. The first visible light beam L1 may be, for example, a blue light beam. The second visible light beam L2 may be, for example, a yellow light beam. In this projection system 100b, the first visible light beam L1, the second visible light beam L2, and the near infrared light beam L3, all emitted from the light source unit 1b, are subjected to spatial light modulation by the spatial light modulation unit 2b to produce a first image light beam L11, a second image light beam L12, and a third image light beam L13, respectively, which are projected from the projection optical system 3. The projection system 100b may be, for example, a projector.

### (3.2) Configuration for projection system

As shown in FIG. 7, the projection system 100b includes a light source unit 1b, a spatial light modulation unit 2b, the projection optical system 3, and a controller 4b. The spatial light modulation unit 2b includes an image display element 21b.

The projection system 100b further includes a lighting optical system 5b, the first relay lens 56, the second relay lens 57, and the totally reflecting prism 7.

### (3.2.1) Lighting optical system

The lighting optical system 5b is an optical system for uniformizing the illuminance distribution of the image display element 21b.

The lighting optical system 5b includes an integrator rod 55.

In this lighting optical system 5b, the integrator rod 55 is disposed on an extension of the optical axis of the light source unit 1b to be interposed between the light source unit 1b and the first relay lens 56.

The first visible light beam L1, the second visible light beam L2, and the near infrared light beam L3, all emitted from the light source unit 1b, are transmitted through the lighting optical system 5b and incident on the totally reflecting prism 7 through the first relay lens 56 and the second relay lens 57.

### (3.2.2) Spatial light modulation unit

The spatial light modulation unit 2b includes a single image display element 21b. The image display element 21b is an MEMS device having a plurality of moving mirrors provided for plurality of pixels, respectively. For example, the image display element 21b may be a DMD.

### (3.2.3) Totally reflecting prism

The totally reflecting prism 7 is interposed between the image display element 21b and the projection optical system 3.

The totally reflecting prism 7 includes two triangular prisms 71, 72, which are arranged to face each other with a very narrow gap left between themselves.

The totally reflecting prism 7 totally reflects the first visible light beam L1, the second visible light beam L2, and the near infrared light beam L3, all coming from the second relay lens 57, toward the image display element 21b. In addition, the totally reflecting prism 7 lets the first image light beam L11, the second image light beam L12, and the third image light beam L13, which have been produced by having the first visible light beam L1, the second visible light beam L2, and the near infrared light beam L3 subjected to spatial light modulation by the image display element 21b, emerge toward the projection optical system 3.

### (3.2.4) Projection optical system

The projection optical system 3 may project the first image light beam L11, the second image light beam L12, and the third image light beam L13 all coming from the spatial light modulation unit 2b. The first image light beam L11, the second image light beam L12, and the third image light beam L13 emerging from the projection optical system 3 are projected, for example, onto a screen which intersects with an extension of the optical axis of the projection optical system 3. The projection optical system 3 includes a projection lens, through which at least one image light beam, selected from the first image light beam L11, the second image light beam L12, and the third image light beam L13, all transmitted through the totally reflecting prism 7, is projected. The projection lens is a multi-lens.

### (3.2.5) Light source unit

The light source unit 1b includes a light-emitting element 10, a first wavelength-converting portion 11A, and a second wavelength-converting portion 11B. The first wavelength-converting portion 11A includes a first wavelength-converting element that emits the second visible light beam L2 when excited by the first visible light beam L1. The second wavelength-converting portion 11B includes a second wavelength-converting element that emits the near infrared light beam L3 when excited by the first visible light beam L1. The first visible light beam L1 may be, for example, a blue light beam. The second visible light beam L2 may be a yellow light beam.

The light source unit 1b includes a first rotator 191b and a second rotator 125.

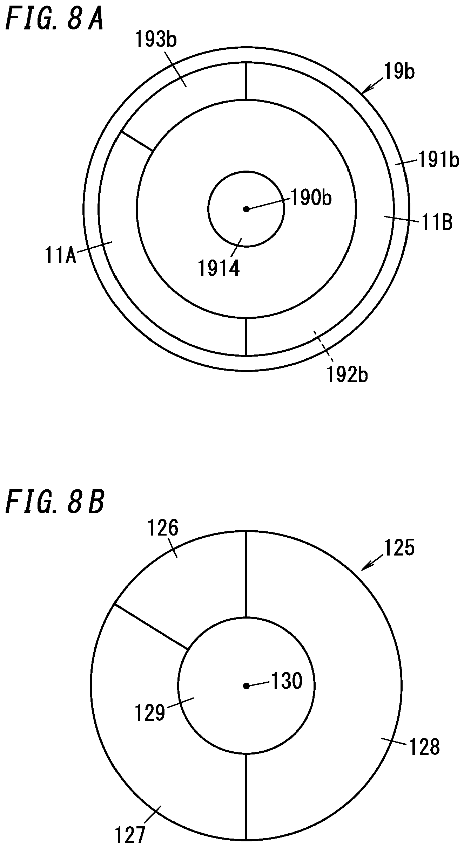

The first rotator 191b is rotatable on a first center axis of rotation 190b. The first wavelength-converting portion 11A is placed on a reflective surface 192b of the first rotator 191b and has the shape of an arc, of which the center is defined by the first center axis of rotation 190b (refer to FIG. 8A). The second wavelength-converting portion 11B is placed on the reflective surface 192b of the first rotator 191b and has the shape of an arc, of which the center is defined by the first center axis of rotation 190b (refer to FIG. 8A). As shown in FIG. 8A, the first rotator 191b includes an emerging portion 193b interposed between the first wavelength-converting portion 11A and the second wavelength-converting portion 11B when viewed in a thickness direction defined for the first rotator 191b. The emerging portion 193b has the shape of an arc, of which the center is defined by the first center axis of rotation 190b and lets the first visible light beam L1 coming from the light-emitting element 10 emerge by transmitting the first visible light beam L1.

The first rotator 191b is coupled to, and rotates along with, the rotary shaft 195 of a motor (hereinafter referred to as a "first motor"), for example. Part of the rotary shaft 195 of the first motor is inserted into a circular opening 1914 of the first rotator 191b. The first rotator 191b has a reflective surface 192b that reflects the second visible light beam L2 and the near infrared light beam L3. The first rotator 191b has a circular shape when viewed in the direction aligned with the first center axis of rotation 190b. The first rotator 191b is arranged such that a thickness direction defined for the first rotator 191b is aligned with the first center axis of rotation 190b. The reflective surface 192b intersects with the thickness direction defined for the first rotator 191b.

The light-emitting element 10 is a semiconductor laser diode having an emission wavelength equal to or longer than 400 nm and equal to or shorter than 480 nm. Thus, the first visible light beam L1 is a blue light beam having a peak wavelength within the wavelength range equal to or longer than 400 nm and equal to or shorter than 480 nm.

The second visible light beam L2 is fluorescent light having light components over the entire wavelength range equal to or longer than 500 nm and equal to or shorter than 600 nm. The second visible light beam is a yellow light beam.

The near infrared light beam L3 is fluorescent light having light components over the entire wavelength range equal to or longer than 700 nm and equal to or shorter than 800 nm and having a peak of fluorescence intensity within the wavelength range equal to or longer than 700 nm and equal to or shorter than 800 nm.

The first wavelength-converting portion 11A may include, for example, a first light-transmitting material portion and first phosphor particles. In this case, the first wavelength-converting portion 11A is formed as a mixture of the first light-transmitting material portion and the first phosphor particles. In the first wavelength-converting portion 11A, there are a great number of first phosphor particles inside the first light-transmitting material portion. A material for the first light-transmitting material portion (i.e., light-transmitting material) is preferably a material that has high transmittance to visible light. The light-transmitting material may be, for example, a silicone-based resin. Examples of the "silicone-based resin" include silicone resin and modified silicone resin. The first wavelength-converting portion 11A contains the first phosphor particles as the first wavelength-converting element. As the first phosphor particles, yellow phosphor particles that radiate yellow light may be adopted, for example. The light (fluorescence) radiated from the yellow phosphor particles preferably has an emission spectrum having a primary emission peak wavelength in a wavelength range equal to or longer than 530 nm and equal to or shorter than 580 nm, for example. The first wavelength-converting element may for example be, but does not have to be, Y₃Al₅O₁₂: Ce³⁺.

The second wavelength-converting portion 11B may include, for example, a second light-transmitting material portion and second phosphor particles. In this case, the second wavelength-converting portion 11B is formed as a mixture of the second light-transmitting material portion and the second phosphor particles. In the second wavelength-converting portion 11B, there are a great number of second phosphor particles inside the second light-transmitting material portion. A material for the second light-transmitting material portion (i.e., light-transmitting material) is preferably a material that has high transmittance to the near infrared light beam L3. The light-transmitting material may be, for example, a silicone-based resin. Examples of the "silicone-based resin" include silicone resin and modified silicone resin. The second wavelength-converting portion 11B contains the second phosphor particles as the second wavelength-converting element. As the second phosphor particles, near infrared phosphor particles that radiate near infrared light may be adopted, for example. The second wavelength-converting element may for example be, but does not have to be, (Gd_{0.75}La_{0.25})₃(Ga_{0.97}Cr_{0.03})₂Ga₃O₁₂: Ce³⁺.

In this light source unit 1b, the first rotator 191b, the first wavelength-converting portion 11A, and the second wavelength-converting portion 11B together form a first wheel member 19b (hereinafter also referred to as a "phosphor wheel 19b").

The second rotator 125 is rotatable on a second center axis of rotation 130. The second rotator 125 is coupled to, and rotates along with, the rotary shaft 136 of a second motor, for example. Part of the rotary shaft 136 of the second motor is inserted into a circular opening 129 of the second rotator 125 (refer to FIG. 8B). The second rotator 125 has a circular shape when viewed in the direction aligned with the second center axis of rotation 130. The second rotator 125 is arranged such that a thickness direction defined for the second rotator 125 is aligned with the second center axis of rotation 130.

As shown in FIG. 8B, the second rotator 125 includes a transmitting portion 126, a first filter portion 127, and a second filter portion 128. The transmitting portion 126 has the shape of an arc, of which the center is defined by the second center axis of rotation 130, and transmits the first visible light beam L1 emerging from the emerging portion 193b of the first rotator 191b. The first filter portion 127 has the shape of an arc, of which the center is defined by the second center axis of rotation 130, and transmits the second visible light beam L2 emerging from the first wavelength-converting portion 11A. More specifically, the first filter portion 127 may have, for example, either a filter characteristic of filtering out a blue component slightly contained in the second visible light beam L2 or a characteristic of relatively decreasing the intensity ratio of shortwave components, having higher intensity than long-wave components, among the fluorescent spectrum components of the second visible light beam L2. This allows the projection system 100b to improve the color rendering performance of while lighting light when the white lighting light is produced. The second filter portion 128 has the shape of an arc, of which the center is defined by the second center axis of rotation 130, and transmits the near infrared light beam L3 emerging from the second wavelength-converting portion 11B. More specifically, the second filter portion 128 may have, for example, a filter characteristic of transmitting light falling within a wavelength range equal to or longer than 760 nm and equal to or shorter than 790 nm, which agrees with the excitation wavelength band of ICG. The second rotator 125 serves as a second wheel member (hereinafter also referred to as a "filter wheel").

The light source unit 1b includes a plurality of (e.g., eight) light-emitting elements 10 as shown in FIG. 7. In this light source unit 1b, the direction in which four out of the eight light-emitting elements 10 are arranged side by side and the direction in which the other four light-emitting elements 10 are arranged side by side are perpendicular to each other.

The light source unit 1b includes a plurality of (e.g., four) mirrors 111, a condenser lens 112, a condenser lens 113, a diffuser 114, a dichroic mirror 115, a condenser lens 116, a condenser lens 117, the first wheel member 19b, a condenser lens 118, a mirror 119, a mirror 120, a relay lens 121, a diffuser 122, a mirror 123, a condenser lens 124, and the second rotator 125.

In this light source unit 1b, the first visible light beams L1 coming from the four light-emitting elements 10 that face the condenser lens 112, out of the eight light-emitting elements 10, are incident on the condenser lens 112, while the first visible light beams L1 coming from the other four light-emitting elements 10 that do not face the condenser lens 112 are reflected from the four mirrors 111, respectively, to be incident on the condenser lens 112. In this light source unit 1b, the condenser lens 112, the condenser lens 113, the diffuser 114, the dichroic mirror 115, the condenser lens 116, the condenser lens 117, the first wheel member 19b, the condenser lens 118, and the mirror 119 are arranged in line.

In this light source unit 1b, the first visible light beams L1 emitted from the eight light-emitting elements 10 are condensed by the condenser lens 112 and the condenser lens 113, diffused by the diffuser 114, condensed again by the condenser lens 116 and the condenser lens 117, and then incident on the first wheel member 19b. The first visible light beam L1 incident on the emerging portion 193b of the first wheel member 19b is condensed by the condenser lens 118, reflected from the mirror 119 and the mirror 120, and then incident on the relay lens 121. The first visible light beam L1 transmitted through the relay lens 121 is diffused by the diffuser 122, reflected from the mirror 123, transmitted through the dichroic mirror 115, condensed by the condenser lens 124, and then incident on the second rotator 125. Also, in this light source unit 1b, the first visible light beam L1 incident on the first wavelength-converting portion 11A of the first wheel member 19b is transformed into the second visible light beam L2, which is incident on the dichroic mirror 115 through the condenser lens 117 and the condenser lens 116 and reflected toward the condenser lens 124. On the other hand, in this light source unit 1b, the first visible light beam L1 incident on the second wavelength-converting portion 11B of the first wheel member 19b is transformed into the near infrared light beam L3, which is incident on the dichroic mirror 115 through the condenser lens 117 and the condenser lens 116 and reflected toward the condenser lens 124.

In this light source unit 1b, the first rotator 191b and the second rotator 125 are synchronized with each other to have the first visible light beam L1, emerging from the emerging portion 193b, transmitted through the transmitting portion 126. In this case, the first rotator 191b and the second rotator 125 rotate at the same rotational velocity.

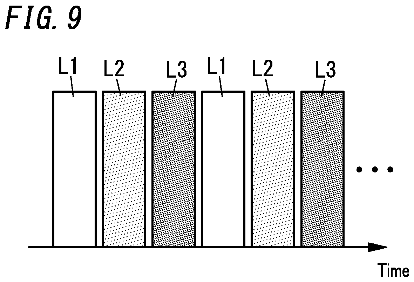

This light source unit 1b lets the first visible light beam L1, the second visible light beam L2, and the near infrared light beam L3 emerge by time division method as shown in FIG. 9.

### (3.2.6) Controller

The controller 4b controls the image display element 21b in accordance with image information (image signal) provided by an external device, for example. This allows the spatial light modulation unit 2b to modulate the first visible light beam (blue light beam) L1, the second visible light beam (yellow light beam) L2, and the near infrared light beam L3 into the first image light beam L11, the second image light beam L12, and the third image light beam L13, respectively, and make the first image light beam L11, the second image light beam L12, and the third image light beam L13 incident on the projection optical system 3 from the totally reflecting prism 7. The projection system 100b may make the projection optical system 3 project a visible light image and a near infrared light image by making the controller 4b appropriately control the image display element 21b. Each of the visible light image and the near infrared light image may be either a still picture or a moving picture, whichever is appropriate.

The controller 4b includes a computer system. The computer system may include a processor and a memory as principal hardware components thereof. The functions of the controller 4b according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a VLSI, and a ULSI. Optionally, an FPGA to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

### (3.2.7) Other constituent elements

The projection system 100b further includes a drive circuit for driving the light-emitting elements 10, a first motor driver circuit for driving the first motor, and a second motor driver circuit for driving the second motor. A supply voltage is supplied from, for example, a first power supply circuit of a power supply unit to the drive circuit, the first motor driver circuit, and the second motor driver circuit. A supply voltage is supplied from, for example, a second power supply circuit of the power supply unit to the controller 4b. In this embodiment, the first power supply circuit and the second power supply circuit are not constituent elements of the projection system 100b. However, this is only an example and should not be construed as limiting. Alternatively, the first power supply circuit and the second power supply circuit may also be constituent elements of the projection system 100b.

The projection system 100b further includes a housing. In this projection system 100b, the light source unit 1b, the spatial light modulation unit 2b, the projection optical system 3, the controller 4b, the lighting optical system 5b, the first relay lens 56, the second relay lens 57, the totally reflecting prism 7, the drive circuit, the first motor driver circuit, the second motor driver circuit, and the power supply unit are housed in the housing.

### (3.3) Recapitulation

A projection system 100b according to the third embodiment includes a light source unit 1b, a spatial light modulation unit 2b, a projection optical system 3, and a controller 4b. The light source unit 1b emits a first visible light beam L1, a second visible light beam L2 having a longer wavelength than the first visible light beam L1, and a near infrared light beam L3. The spatial light modulation unit 2b subjects the first visible light beam L1, the second visible light beam L2, and the near infrared light beam L3, all emitted from the light source unit 1b, to spatial light modulation to produce a first image light beam L11, a second image light beam L12, and a third image light beam L13, respectively. The controller 4b controls the spatial light modulation unit 2b. The controller 4b may make the projection optical system 3 not only selectively project any one of a plurality of image light beams, including the first image light beam L 11, the second image light beam L12, and the third image light beam L13, but also selectively project any two or more of the plurality of image light beams, by controlling the spatial light modulation unit 2b in two different manners.

The projection system 100b according to the third embodiment may project image light beams (namely, the first image light beam L11 and the second image light beam L12) in the form of visible light and an image light beam (namely, the third image light beam L13) in the form of near infrared light and may cut down the cost.

The projection system 100b according to the third embodiment may switch from any one of first, second, third, fourth, and fifth states to another by making the controller 4b control the spatial light modulation unit 2b. As used herein, the expression "the controller 4b controls the spatial light modulation unit 2b" means that the controller 4b controls the image display element 21b. The projection system 100b according to the third embodiment makes the controller 4b control the spatial light modulation unit 2b when projecting an image light beam from the projection optical system 3. In this manner, the projection system 100b according to the third embodiment may or may not allow the first image light beam L11 to emerge from the image display element 21b, may or may not allow the second image light beam L12 to emerge from the image display element 21b, and may or may not allow the third image light beam L13 to emerge from the image display element 21b. The first image light beam L11 is not allowed to emerge from the image display element 21b, for example, in a situation where the image display element 21b is prevented from producing the first image light beam L11. The second image light beam L12 is not allowed to emerge from the image display element 21b, for example, in a situation where the image display element 21b is prevented from producing the second image light beam L12. The third image light beam L13 is not allowed to emerge from the image display element 21b, for example, in a situation where the image display element 21b is prevented from producing the third image light beam L13. As used herein, the first state refers to a state where an arbitrary image light beam selected from the first image light beam L11, the second image light beam L12, and the third image light beam L13 is made to emerge from the totally reflecting prism 7 and be projected by the projection optical system 3. The second state herein refers to a state where the first image light beam L11 and the second image light beam L12 are made to emerge from the totally reflecting prism 7 and be projected by the projection optical system 3. The third state herein refers to a state where the first image light beam L11 and the third image light beam L13 are made to emerge from the totally reflecting prism 7 and be projected by the projection optical system 3. The fourth state herein refers to a state where the second image light beam L12 and the third image light beam L13 are made to emerge from the totally reflecting prism 7 and be projected by the projection optical system 3. The fifth state herein refers to a state where the first image light beam L11, the second image light beam L12, and the third image light beam L13 are made to emerge from the totally reflecting prism 7 and be projected by the projection optical system 3. The projection system 100b according to the third embodiment may project image light beams (namely, the first image light beam L11 and the second image light beam L12) in the form of visible light and an image light beam (namely, the third image light beam L13) in the form of near infrared light without changing the number or the arrangement of respective parts of the known projector that uses a single DMD to change the color by time division method, thus enabling cutting down the cost.

The projection system 100b according to the third embodiment is suitable for use in, for example, a medical lighting system, to which ICG fluorescent light observation is applied.

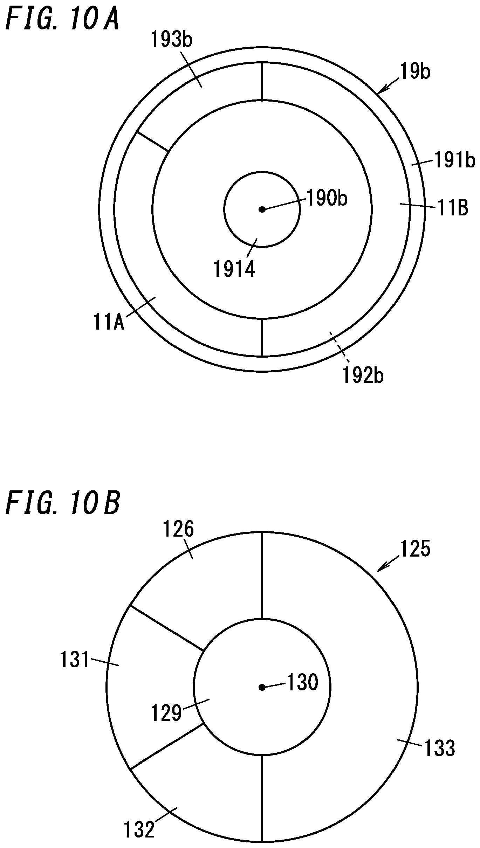

The first wheel member 19b and the second wheel member (i.e., the second rotator 125) do not have to be the exemplary combination shown in FIGS. 8A and 8B but may also be the exemplary combination shown in FIGS. 10A and 10B. The first wheel member 19b shown in FIG. 10A has the same configuration as the counterpart shown in FIG. 8A. The second wheel member (second rotator 125) shown in FIG. 10B has a different configuration from the rotator 125 shown in FIG. 8B. The second rotator 125 shown in FIG. 10B includes the transmitting portion 126, a green filtering portion 131, a red filtering portion 132, and a near infrared light filtering portion 133. Each of the transmitting portion 126, the green filtering portion 131, the red filtering portion 132, and the near infrared light filtering portion 133 has an arc shape. The transmitting portion 126, the green filtering portion 131, the red filtering portion 132, and the near infrared light filtering portion 133 are arranged in this order counterclockwise along the circumference, to start from the transmitting portion 126. The green filtering portion 131 is designed to extract, by filtering, and transmit, a green component of the second visible light beam L2 emerging from the first wavelength-converting portion 11A of the first wheel member 19b (refer to FIG. 10A). The red filtering portion 132 is designed to extract, by filtering, and transmit, a red component of the second visible light beam L2 emerging from the first wavelength-converting portion 11A of the first wheel member 19b. The near infrared light filtering portion 133 is designed to extract, by filtering, and transmit, the near infrared light beam L3 emerging from the second wavelength-converting portion 11B of the first wheel member 19b. The projection system 100b according to the third embodiment adopts, in combination, the first wheel member 19b shown in FIG. 10A and the second wheel member (second rotator 125) shown in FIG. 10B, thereby allowing the light source unit 1b to emit a blue light beam, a green light beam, a red light beam, and a near infrared light beam. Thus, this projection system 100b may display an image in full colors.

### (Other variations)

Note that the first to third embodiments described above are only exemplary ones of various embodiments of the present disclosure and should not be construed as limiting. Rather, the first to third exemplary embodiments may be readily modified in various manners depending on a design choice or any other factor without departing from the scope of the present disclosure.

For example, the emerging portion 193b of the first rotator 191b is not necessarily configured to let the first visible light beam L1 emerge by transmitting the first visible light beam L1 but may be configured to let the first visible light beam L1 emerge by reflecting the first visible light beam L1.

Optionally, the projection system 100b may include no second rotator 125.

The light-emitting element 10 does not have to be a semiconductor laser diode but may also be a light-emitting diode (LED).

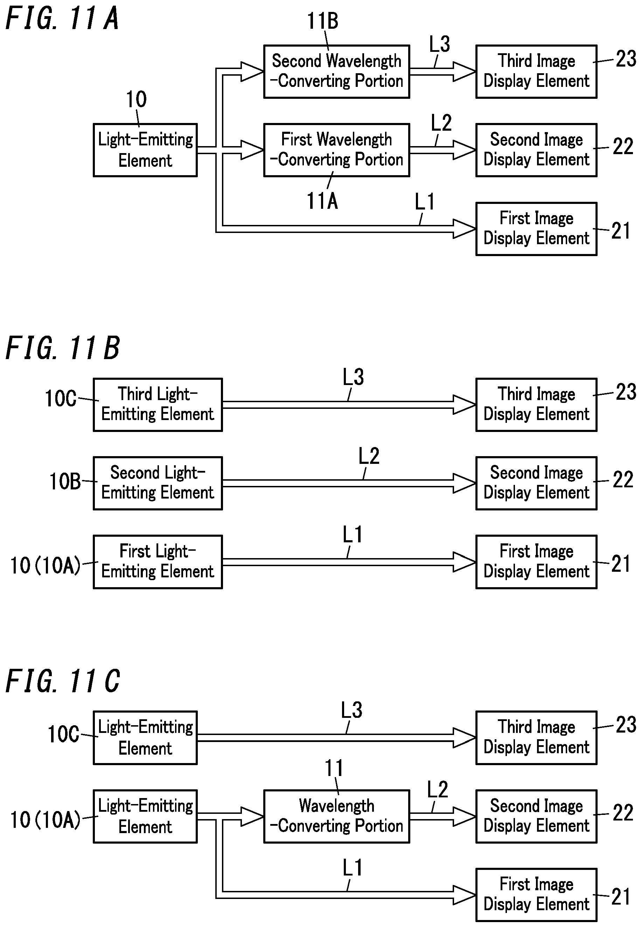

The projection system may also be configured, as shown in FIG. 11A, to make the first visible light beam L1 emitted from the light-emitting element 10 incident on the first image display element 21, make the first wavelength-converting portion 11A transform the first visible light beam L1 coming from the light-emitting element 10 into the second visible light beam L2 and make the second visible light beam L2 incident on the second image display element 22, and make the second wavelength-converting portion 11B transform the first visible light beam L1 coming from the light-emitting element 10 into the near infrared light beam L3 and make the near infrared light beam L3 incident on the third image display element 23.

The projection system may include, as shown in FIG. 11B: a light-emitting element 10A as an LED (light-emitting diode) that emits the first visible light beam L1 (hereinafter referred to as a "first light-emitting element 10A"); a light-emitting element 10B as an LED that emits the second visible light beam L2 (hereinafter referred to as a "second light-emitting element 10B"); and a light-emitting element 10C as an LED that emits the near infrared light beam L3 (hereinafter referred to as a "third light-emitting element 10C"). In the example shown in FIG. 11B, the first light-emitting element 10A, the second light-emitting element 10B, and the third light-emitting element 10C correspond one to one to the first image display element 21, the second image display element 22, and the third image display element 23, respectively. That is to say, the projection system may also be configured to have the first visible light beam L1 coming from the first light-emitting element 10A subjected to spatial light modulation by the first image display element 21, have the second visible light beam L2 coming from the second light-emitting element 10B subjected to spatial light modulation by the second image display element 22, and have the near infrared light beam L3 coming from the third light-emitting element 10C subjected to spatial light modulation by the third image display element 23.

Alternatively, the projection system may include, as shown in FIG. 11C: a light-emitting element 10 (light-emitting element 10A) that emits the first visible light beam L1; and a light-emitting element 10C implemented as either a semiconductor laser diode or an LED that emits the near infrared light beam L3. In the example shown in FIG. 11C, the first visible light beam L1 coming from the light-emitting element 10A is subjected to spatial light modulation by the first image display element 21. The second visible light beam L2, produced by having the first visible light beam L1 coming from the light-emitting element 10A transformed by the wavelength-converting portion 11, is subjected to spatial light modulation by the second image display element 22. Furthermore, in the example shown in FIG. 11C, the near infrared light beam L3 coming from the light-emitting element 10C is subjected to spatial light modulation by the third image display element 23.

### (Aspects)

The first to third exemplary embodiments and their variations described above are specific implementations of the following aspects of the present disclosure.

A projection system (100; 100a; 100b) according to a first aspect includes a light source unit (1; 1b), a spatial light modulation unit (2; 2a; 2b), a projection optical system (3), and a controller (4; 4a; 4b). The light source unit (1; 1b) emits a first visible light beam (L1), a second visible light beam (L2) having a longer wavelength than the first visible light beam (L1), and a near infrared light beam (L3). The spatial light modulation unit (2; 2a; 2b) subjects the first visible light beam (L1), the second visible light beam (L2), and the near infrared light beam (L3) all emitted from the light source unit (1; 1b) to spatial light modulation to produce a first image light beam (L11), a second image light beam (L12), and a third image light beam (L13), respectively. The controller (4; 4a; 4b) controls the spatial light modulation unit (2; 2a; 2b). The controller (4; 4a; 4b) is able to make the projection optical system (3) not only selectively project any one of a plurality of image light beams, including the first image light beam (L11), the second image light beam (L12), and the third image light beam (L13), but also selectively project any two or more of the plurality of image light beams, by controlling the spatial light modulation unit (2; 2a; 2b) in two different manners.

The projection system (100; 100a; 100b) according to the first aspect may project image light beams (namely, the first image light beam L11 and the second image light beam L12) in the form of visible light and an image light beam (namely, the third image light beam L13) in the form of near infrared light and may cut down the cost.

In a projection system (100; 100a) according to a second aspect, which may be implemented in conjunction with the first aspect, the spatial light modulation unit (2; 2a) includes a first image display element (21; 21a), a second image display element (22; 22a), and a third image display element (23; 23a). The first image display element (21; 21a) subjects the first visible light beam (L1) to spatial light modulation on a pixel-by-pixel basis to produce the first image light beam (L11). The second image display element (22; 22a) subjects the second visible light beam (L2) to spatial light modulation on the pixel-by-pixel basis to produce the second image light beam (L12). The third image display element (23; 23a) subjects the near infrared light beam (L3) to spatial light modulation on the pixel-by-pixel basis to produce the third image light beam (L13).

The projection system (100; 100a) according to the second aspect may project image light beams (namely, the first image light beam L11 and the second image light beam L12) in the form of visible light and an image light beam (namely, the third image light beam L13) in the form of near infrared light without changing the number or the arrangement of respective parts of the known three-panel projector that uses three spatial light modulators for the colored light beams in red, green, and blue, respectively, thus enabling cutting down the cost.

In a projection system (100) according to a third aspect, which may be implemented in conjunction with the second aspect, each of the first image display element (21), the second image display element (22), and the third image display element (23) is a liquid crystal display.

The projection system (100) according to the third aspect may cut down the cost compared to a situation where the first image display element (21), the second image display element (22), and the third image display element (23) are each implemented as a DMD.

In a projection system (100a) according to a fourth aspect, which may be implemented in conjunction with the second aspect, each of the first image display element (21a), the second image display element (22a), and the third image display element (23a) is a DMD.

The projection system (100a) according to the fourth aspect may improve the image quality compared to a situation where the first image display element (21a), the second image display element (22a), and the third image display element (23a) are each implemented as a liquid crystal display.

In a projection system (100; 100a) according to a fifth aspect, which may be implemented in conjunction with any one of the second to fourth aspects, the first visible light beam (L1) is a blue light beam, and the second visible light beam (L2) is a yellow light beam.

The projection system (100; 100a) according to the fifth aspect may turn the respective colors of multiple pixels of a projected image into white by synthesizing the first image light beam (L11) and the second image light beam (L12) together.

In a projection system (100; 100a) according to a sixth aspect, which may be implemented in conjunction with the fifth aspect, the light source unit (1) includes a light-emitting element (10) and a wavelength-converting portion (11). The light-emitting element (10) emits the first visible light beam (L1). The wavelength-converting portion (11) includes a first wavelength-converting element that emits the second visible light beam (L2) when excited by the first visible light beam (L1) and a second wavelength-converting element that emits the near infrared light beam (L3) when excited by the first visible light beam (L1). The second visible light beam (L2) is fluorescent light having light components over an entire wavelength range equal to or longer than 500 nm and equal to or shorter than 600 nm. The near infrared light beam (L3) is fluorescent light having a peak of fluorescence intensity within a wavelength range equal to or longer than 700 nm and equal to or shorter than 800 nm.

In a projection system (100; 100a) according to a seventh aspect, which may be implemented in conjunction with the sixth aspect, the light-emitting element (10) is a semiconductor laser diode having an emission wavelength equal to or longer than 400 nm and equal to or shorter than 480 nm.

The projection system (100; 100a) according to the seventh aspect may contribute to increasing the optical output powers of the first visible light beam (L1), the second visible light beam (L2), and the near infrared light beam (L3).

In a projection system (100; 100a) according to an eighth aspect, which may be implemented in conjunction with the sixth or seventh aspect, the light source unit (1) includes a rotator (191). The rotator (191) is rotatable on a center axis of rotation (190) and has a reflective surface (192) that reflects the second visible light beam (L2) and the near infrared light beam (L3). The wavelength-converting portion (11) is disposed on the reflective surface (192) of the rotator (191) and has a ring shape when viewed in a direction aligned with the center axis of rotation (190).

The projection system (100; 100a) according to the eighth aspect may have the second visible light beam (L2) and the near infrared light beam (L3), which have been produced by the single wavelength-converting portion (11) and radiated toward the rotator (191), reflected from the reflective surface (192) of the rotator (191), thus allowing the second visible light beam (L2) and the near infrared light beam (L3) to emerge using a simple configuration.

In a projection system (100b) according to a ninth aspect, which may be implemented in conjunction with the first aspect, the light source unit (1b) emits the first visible light beam (L1), the second visible light beam (L2), and the near infrared light beam (L3) by time division method. The spatial light modulation unit (2b) includes an image display element (21b) that subjects each of the first visible light beam (L1), the second visible light beam (L2), and the near infrared light beam (L3) to spatial light modulation on a pixel-by-pixel basis to produce the image light beams.

The projection system (100b) according to the ninth aspect may use a spatial light modulation unit (2b) with a simpler configuration than the spatial light modulation unit (2).

In a projection system (100b) according to a tenth aspect, which may be implemented in conjunction with the ninth aspect, the image display element (21b) is a digital micromirror device.

The projection system (100b) according to the tenth aspect may use a spatial light modulation unit (2b) with a simpler configuration than the spatial light modulation unit (2).

In a projection system (100b) according to an eleventh aspect, which may be implemented in conjunction with the ninth or tenth aspect, the light source unit (1b) includes a light-emitting element (10), a first wavelength-converting portion (11A), and a second wavelength-converting portion (11B). The light-emitting element (10) emits the first visible light beam (L1). The first wavelength-converting portion (11A) emits the second visible light beam (L2) when excited by the first visible light beam (L1). The second wavelength-converting portion (11B) emits the near infrared light beam (L3) when excited by the first visible light beam (L1). The second visible light beam (L2) is fluorescent light having light components over an entire wavelength range equal to or longer than 500 nm and equal to or shorter than 600 nm. The near infrared light beam (L3) is fluorescent light having a peak of fluorescence intensity within a wavelength range equal to or longer than 700 nm and equal to or shorter than 800 nm.

In the projection system (100b) according to the eleventh aspect, the second visible light beam (L2) has light components over the entire wavelength range equal to or longer than 500 nm and equal to or shorter than 600 nm, thus improving the color rendering performance of white light. In addition, in the projection system (100b) according to the eleventh aspect, the near infrared light beam (L3) has a peak of fluorescence intensity within a wavelength range equal to or longer than 700 nm and equal to or shorter than 800 nm, which makes the near infrared light beam (L3) usable as excitation light when the projection system (100b) is used to observe ICG fluorescent light.

In a projection system (100b) according to a twelfth aspect, which may be implemented in conjunction with the eleventh aspect, the light-emitting element (10) is a semiconductor laser diode having an emission wavelength equal to or longer than 400 nm and equal to or shorter than 480 nm.

In a projection system (100b) according to a thirteenth aspect, which may be implemented in conjunction with the eleventh or twelfth aspect, the light source unit (1b) includes a first rotator (191b). The first rotator (191b) is rotatable on a first center axis of rotation (190b) and has a reflective surface (192b) intersecting with a thickness direction. The first wavelength-converting portion (11A) is disposed on the reflective surface (192b) of the first rotator (191b) and has a shape of an arc, of which a center is defined by the first center axis of rotation (190b). The second wavelength-converting portion (11B) is disposed on the reflective surface (192b) of the first rotator (191b) and has a shape of an arc, of which a center is defined by the first center axis of rotation (190b). The first rotator (191b) includes an emerging portion (193b) interposed between the first wavelength-converting portion (11A) and the second wavelength-converting portion (11B) when viewed in the thickness direction defined for the first rotator (191b). The emerging portion (193b) has a shape of an arc, of which a center is defined by the first center axis of rotation (190b) and lets the first visible light beam (L1), emitted from the light-emitting element (10), emerge by either transmitting or reflecting the first visible light beam (L1).

The projection system (100b) according to the thirteenth aspect may produce the first visible light beam (L1), the second visible light beam (L2), and the near infrared light beam (L3) time sequentially by rotating the first rotator (191b).

In a projection system (100b) according to a fourteenth aspect, which may be implemented in conjunction with the thirteenth aspect, the light source unit (1b) further includes a second rotator (125). The second rotator (125) is rotatable on a second center axis of rotation (130). The second rotator (125) includes a transmitting portion (126), a first filter portion (127), and a second filter portion (128). The transmitting portion (126) has a shape of an arc, of which center is defined by the second center axis of rotation (130), and transmits the first visible light beam (L1) emerging from the emerging portion (193b) of the first rotator (191b). The first filter portion (127) has a shape of an arc, of which a center is defined by the second center axis of rotation (130), and transmits the second visible light beam (L2) emerging from the first wavelength-converting portion (11A). The second filter portion (128) has a shape of an arc, of which a center is defined by the second center axis of rotation (130), and transmits the near infrared light beam (L3) emerging from the second wavelength-converting portion (11B).

The projection system (100b) according to the fourteenth aspect may make the transmitting portion (126) transmit the first visible light beam (L1), make the first filter portion (127) trim the second visible light beam (L2), and make the second filter portion (128) trim the near infrared light beam (L3), by rotating the second rotator (125).

In a projection system (100b) according to a fifteenth aspect, which may be implemented in conjunction with the thirteenth aspect, the light source unit (1b) further includes a second rotator (125). The second rotator (125) is rotatable on a second center axis of rotation (130). The second rotator (125) includes a transmitting portion (126), a green filtering portion (131), a red filtering portion (132), and a near infrared light filtering portion (133). The transmitting portion (126) has a shape of an arc, of which a center is defined by the second center axis of rotation (130), and transmits the first visible light beam (L1) emerging from the emerging portion (193b) of the first rotator (191b). The green filtering portion (131) has a shape of an arc, of which a center is defined by the second center axis of rotation (130), and extracts a green light component from the second visible light beam (L2) emerging from the first wavelength-converting portion (11A). The red filtering portion (132) has a shape of an arc, of which a center is defined by the second center axis of rotation (130), and extracts a red light component from the second visible light beam (L2) emerging from the first wavelength-converting portion (11A). The near infrared light filtering portion (133) has a shape of an arc, of which a center is defined by the second center axis of rotation (130), and transmits the near infrared light beam (L3) emerging from the second wavelength-converting portion (11B).

The projection system (100b) according to the fifteenth aspect allows a blue light beam, a green light beam, a red light beam, and a near infrared light beam to emerge from the light source unit (1b).

### Reference Signs List

- 1, 1b: Light Source Unit
- 2, 2a, 2b: Spatial Light Modulation Unit
- 3: Projection Optical System
- 4, 4a, 4b: Controller
- 10: Light-Emitting Element
- 11: Wavelength-Converting Portion
- 11A: First Wavelength-Converting Portion
- 11B: Second Wavelength-Converting Portion
- 125: Second Rotator
- 126: Transmitting Portion
- 127: First Filtering Portion
- 128: Second Filtering Portion
- 131: Green Light Filtering Portion
- 132: Red Light Filtering Portion
- 133: Near Infrared Light Filtering Portion
- 100, 100a, 100b: Projection System
- 130: Second Center Axis of Rotation
- 190: Center Axis of Rotation
- 190b: First Center Axis of Rotation
- 191: Rotator
- 191b: First Rotator
- 192, 192b: Reflective Surface
- 193b: Emerging Portion
- L1: First Visible Light Beam
- L2: Second Visible Light Beam
- L3: Near Infrared Light Beam
- L11: First Image Light Beam
- L12: Second Image Light Beam
- L13: Third Image Light Beam

## Claims

1. A projection system comprising:
a light source unit configured to emit a first visible light beam, a second visible light beam having a longer wavelength than the first visible light beam, and a near infrared light beam;
a spatial light modulation unit configured to subject the first visible light beam, the second visible light beam, and the near infrared light beam, all emitted from the light source unit, to spatial light modulation to produce a first image light beam, a second image light beam, and a third image light beam, respectively;
a projection optical system; and
a controller configured to control the spatial light modulation unit,
the controller being able to make the projection optical system not only selectively project any one of a plurality of image light beams, including the first image light beam, the second image light beam, and the third image light beam, but also selectively project any two or more of the plurality of image light beams, by controlling the spatial light modulation unit in two different manners.

2. The projection system of claim 1, wherein
the spatial light modulation unit includes:
a first image display element configured to subject the first visible light beam to spatial light modulation on a pixel-by-pixel basis to produce the first image light beam;
a second image display element configured to subject the second visible light beam to spatial light modulation on the pixel-by-pixel basis to produce the second image light beam; and
a third image display element configured to subject the near infrared light beam to spatial light modulation on the pixel-by-pixel basis to produce the third image light beam.

3. The projection system of claim 2, wherein
each of the first image display element, the second image display element, and the third image display element is a liquid crystal display.

4. The projection system of claim 2, wherein
each of the first image display element, the second image display element, and the third image display element is a DMD.

5. The projection system of any one of claims 2 to 4, wherein
the first visible light beam is a blue light beam, and
the second visible light beam is a yellow light beam.

6. The projection system of claim 5, wherein
the light source unit includes:
a light-emitting element configured to emit the first visible light beam; and
a wavelength-converting portion including a first wavelength-converting element that emits the second visible light beam when excited by the first visible light beam and a second wavelength-converting element that emits the near infrared light beam when excited by the first visible light beam, and
the second visible light beam is fluorescent light having light components over an entire wavelength range equal to or longer than 500 nm and equal to or shorter than 600 nm, and
the near infrared light beam is fluorescent light having a peak of fluorescence intensity within a wavelength range equal to or longer than 700 nm and equal to or shorter than 800 nm.

7. The projection system of claim 6, wherein
the light-emitting element is a semiconductor laser diode having an emission wavelength equal to or longer than 400 nm and equal to or shorter than 480 nm.

8. The projection system of claim 6 or 7, wherein
the light source unit includes a rotator rotatable on a center axis of rotation and having a reflective surface that reflects the second visible light beam and the near infrared light beam, and
the wavelength-converting portion is disposed on the reflective surface of the rotator and has a ring shape when viewed in a direction aligned with the center axis of rotation.

9. The projection system of claim 1, wherein
the light source unit is configured to emit the first visible light beam, the second visible light beam, and the near infrared light beam by time division method, and
the spatial light modulation unit includes an image display element configured to subject each of the first visible light beam, the second visible light beam, and the near infrared light beam to spatial light modulation on a pixel-by-pixel basis to produce the first image light beam, the second image light beam, and the third image light beam, respectively.

10. The projection system of claim 9, wherein
the image display element is a digital micromirror device.

11. The projection system of claim 9 or 10, wherein
the light source unit includes:
a light-emitting element configured to emit the first visible light beam; and
a first wavelength-converting portion configured to emit the second visible light beam when excited by the first visible light beam; and
a second wavelength-converting portion configured to emit the near infrared light beam when excited by the first visible light beam,
the second visible light beam is fluorescent light having light components over an entire wavelength range equal to or longer than 500 nm and equal to or shorter than 600 nm, and
the near infrared light beam is fluorescent light having a peak of fluorescence intensity within a wavelength range equal to or longer than 700 nm and equal to or shorter than 800 nm.

12. The projection system of claim 11, wherein
the light-emitting element is a semiconductor laser diode having an emission wavelength equal to or longer than 400 nm and equal to or shorter than 480 nm.

13. The projection system of claim 11 or 12, wherein
the light source unit includes a first rotator rotatable on a first center axis of rotation and having a reflective surface intersecting with a thickness direction,
the first wavelength-converting portion is disposed on the reflective surface of the first rotator and has a shape of an arc, of which a center is defined by the first center axis of rotation,
the second wavelength-converting portion is disposed on the reflective surface of the first rotator and has a shape of an arc, of which a center is defined by the first center axis of rotation, and
the first rotator includes an emerging portion having a shape of an arc, of which a center is defined by the first center axis of rotation, and interposed between the first wavelength-converting portion and the second wavelength-converting portion when viewed in the thickness direction and configured to let the first visible light beam, emitted from the light-emitting element, emerge by either transmitting or reflecting the first visible light beam.

14. The projection system of claim 13, wherein
the light source unit further includes a second rotator rotatable on a second center axis of rotation, and
the second rotator includes:
a transmitting portion having a shape of an arc, of which a center is defined by the second center axis of rotation, and configured to transmit the first visible light beam emerging from the emerging portion of the first rotator;
a first filter portion having a shape of an arc, of which a center is defined by the second center axis of rotation, and configured to transmit the second visible light beam emerging from the first wavelength-converting portion; and
a second filter portion having a shape of an arc, of which a center is defined by the second center axis of rotation, and configured to transmit the near infrared light beam emerging from the second wavelength-converting portion.

15. The projection system of claim 13, wherein
the light source unit further includes a second rotator rotatable on a second center axis of rotation, and
the second rotator includes:
a transmitting portion having a shape of an arc, of which a center is defined by the second center axis of rotation, and configured to transmit the first visible light beam emerging from the emerging portion of the first rotator;
a green light filtering portion having a shape of an arc, of which a center is defined by the second center axis of rotation, and configured to extract a green light component from the second visible light beam emerging from the first wavelength-converting portion;
a red light filtering portion having a shape of an arc, of which a center is defined by the second center axis of rotation, and configured to extract a red light component from the second visible light beam emerging from the first wavelength-converting portion; and
a near infrared light filtering portion having a shape of an arc, of which a center is defined by the second center axis of rotation, and configured to transmit the near infrared light beam emerging from the second wavelength-converting portion.
